(19)

Europäisches
Patentamt
European
Patent Office
Office européen
des brevets

(11) **EP 4 379 867 A1**

(12) **EUROPEAN PATENT APPLICATION**
published in accordance with Art. 153(4) EPC

(43) Date of publication:
**05.06.2024 Bulletin 2024/23**

(21) Application number: **22849166.8**

(22) Date of filing: **01.07.2022**

(51) International Patent Classification (IPC):
*H01M 4/62* [(2006.01)]    *H01M 4/13* [(2010.01)]
*H01M 10/0566* [(2010.01)]

(52) Cooperative Patent Classification (CPC):
**H01M 4/13; H01M 4/62; H01M 10/0566;**
Y02E 60/10

(86) International application number:
**PCT/JP2022/026509**

(87) International publication number:
**WO 2023/008100 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.07.2021 JP 2021122729**

(71) Applicant: **Zeon Corporation
Tokyo 100-8246 (JP)**

(72) Inventors:
• **ADACHI, Yusuke
Tokyo 100-8246 (JP)**
• **MIWATA, Tomohiro
Tokyo 100-8246 (JP)**

(74) Representative: **Maiwald GmbH
Elisenhof
Elisenstraße 3
80335 München (DE)**

(54) **BINDER COMPOSITION FOR NON-AQUEOUS SECONDARY BATTERY NEGATIVE ELECTRODE, SLURRY COMPOSITION FOR NON-AQUEOUS SECONDARY BATTERY NEGATIVE ELECTRODE, NEGATIVE ELECTRODE FOR NON-AQUEOUS SECONDARY BATTERY, AND NON-AQUEOUS SECONDARY BATTERY**

(57)    Provided is a binder composition for a non-aqueous secondary battery negative electrode capable of producing a slurry composition having suppressed foaming and forming a negative electrode mixed material layer having excellent resistance to peeling. The binder composition for a non-aqueous secondary battery negative electrode contains a particulate binder and water. The particulate binder includes a polymer including an ethylenically unsaturated carboxylic acid monomer unit, an aromatic vinyl monomer unit, and an aliphatic conjugated diene monomer unit. When a film of the particulate binder is formed, the film has a degree of swelling of insoluble content in tetrahydrofuran of 300 mass% to 1500 mass% and an amount of insoluble content in tetrahydrofuran of 85 mass% to 99 mass%. A ratio of viscosity at pH 8.0 relative to viscosity at pH 3.0 of the binder composition when set to a solid content concentration of 30 mass% is 1.5 to 200.

EP 4 379 867 A1

## Description

TECHNICAL FIELD

The present disclosure relates to a binder composition for a non-aqueous secondary battery negative electrode, a slurry composition for a non-aqueous secondary battery negative electrode, a negative electrode for a non-aqueous secondary battery, and a non-aqueous secondary battery.

BACKGROUND

Non-aqueous secondary batteries (hereinafter, also referred to simply as "secondary batteries") such as lithium ion secondary batteries have characteristics such as compact size, light weight, high energy-density, and the ability to be repeatedly charged and discharged, and are used in a wide range of applications. Consequently, in recent years, studies have been made to improve battery members such as electrodes with the aim of further increasing non-aqueous secondary battery performance.

An electrode used in a secondary battery normally includes a current collector and an electrode mixed material layer (positive electrode mixed material layer or negative electrode mixed material layer) formed on the current collector. This electrode mixed material layer is formed by, for example, applying a slurry composition containing an electrode active material, a binder-containing binder composition, and so forth onto the current collector, and then drying the applied slurry composition.

In recent years, attempts have been made to improve binder compositions used in the formation of electrode mixed material layers in order to achieve further improvement of secondary battery performance. As one example, Patent Literature (PTL) 1 proposes a composition for an electrical storage device containing a polymer and a liquid solvent with the aim of producing an electrical storage device electrode that has excellent flexibility and close adherence (close adhesion ability, abrasion resistance, dusting resistance, etc.) and that displays good charge/discharge durability characteristics (cycle characteristics). The polymer includes a repeating unit derived from a conjugated diene, a repeating unit derived from an unsaturated carboxylic acid, and one or more repeating units selected from the group consisting of a repeating unit derived from an unsaturated carboxylic acid ester that includes a hydroxyl group or an ether group, a repeating unit derived from (meth)acrylamide, and a repeating unit derived from an $\alpha,\beta$-unsaturated nitrile compound in desired proportions. PTL 1 discloses that the polymer may be dispersed in the liquid solvent in a latex form and that water may be used as the liquid solvent.

Moreover, PTL 1 discloses a slurry for an electrical storage device electrode that contains the aforementioned composition and an active material. Furthermore, PTL 1 discloses an electrical storage device electrode that includes a current collector and an active material layer formed through application and drying of the aforementioned slurry on the current collector and also discloses an electrical storage device including this electrode.

CITATION LIST

Patent Literature

PTL 1: JP2020-9651A

SUMMARY

(Technical Problem)

In order to obtain good electrical characteristics in a non-aqueous secondary battery, it is desirable that a negative electrode mixed material layer has a uniform porous structure with few defects such as pinholes. Moreover, in order to inhibit the formation of pinholes, it is desirable that a slurry composition used for forming a negative electrode mixed material layer has little foaming.

Furthermore, since a negative electrode active material in a negative electrode mixed material layer repeatedly expands and contracts in accompaniment to charging and discharging, it is desirable that a negative electrode mixed material layer formed on a current collector is not easily peeled from the current collector through charging and discharging of a non-aqueous secondary battery in order to maintain performance of the non-aqueous secondary battery.

However, a slurry composition in which a conventional binder composition is used has a high tendency to foam, and pinholes may form in a negative electrode mixed material layer that is formed using this slurry composition. Moreover, a negative electrode mixed material layer that is formed from a slurry composition in which a conventional binder composition is used has insufficient resistance to peeling from a current collector and leaves room for improvement.

Accordingly, one object of the present disclosure is to provide a binder composition for a non-aqueous secondary battery negative electrode that is capable of producing a slurry composition having suppressed foaming and forming a negative electrode mixed material layer having excellent resistance to peeling.

Another object of the present disclosure is to provide a slurry composition for a non-aqueous secondary battery negative electrode that contains this binder composition for a non-aqueous secondary battery negative electrode.

Another object of the present disclosure is to provide a negative electrode for a non-aqueous secondary battery that includes a negative electrode mixed material layer formed through this slurry composition for a non-aqueous secondary battery negative electrode.

Another object of the present disclosure is to provide a non-aqueous secondary battery that includes this negative electrode for a non-aqueous secondary battery.

(Solution to Problem)

The inventors conducted diligent investigation with the aim of solving the problems set forth above. The inventors made a new discovery that the problems set forth above can be solved through a binder composition for a non-aqueous secondary battery negative electrode that contains a particulate binder and water, wherein the particulate binder includes specific monomer units, a formed film of the particulate binder has a degree of swelling and amount of insoluble content in tetrahydrofuran that are within desired numerical ranges, and a ratio of viscosity at pH 8.0 relative to viscosity at pH 3.0 of the binder composition when set to a solid content concentration of 30 mass% is within a desired numerical range. In this manner, the inventors completed the present disclosure.

Specifically, the present disclosure aims to solve the problems set forth above, and a presently disclosed binder composition for a non-aqueous secondary battery negative electrode comprises a particulate binder and water, wherein the particulate binder includes a polymer including an ethylenically unsaturated carboxylic acid monomer unit, an aromatic vinyl monomer unit, and an aliphatic conjugated diene monomer unit, when a film of the particulate binder is formed, the film has: a degree of swelling of insoluble content in tetrahydrofuran of not less than 300 mass% and not more than 1500 mass%; and an amount of insoluble content in tetrahydrofuran of not less than 85 mass% and not more than 99 mass%, and a ratio of viscosity at pH 8.0 relative to viscosity at pH 3.0 of the binder composition when set to a solid content concentration of 30 mass% is not less than 1.5 and not more than 200. A binder composition for a non-aqueous secondary battery negative electrode such as set forth above is capable of producing a slurry composition having suppressed foaming and forming a negative electrode mixed material layer having excellent resistance to peeling.

Note that a "monomer unit" of a polymer referred to in the present specification is a "repeating unit derived from that monomer that is included in a polymer obtained using the monomer".

The degree of swelling, amount of insoluble content, viscosity at pH 3.0, and viscosity at pH 8.0 can be calculated in accordance with methods described in the EXAMPLES section of the present specification.

In the presently disclosed binder composition for a non-aqueous secondary battery negative electrode, a proportion constituted by the ethylenically unsaturated carboxylic acid monomer unit in the polymer is preferably not less than 2 mass% and not more than 35 mass%.

When the proportion constituted by the ethylenically unsaturated carboxylic acid monomer unit is not less than the lower limit set forth above, a negative electrode mixed material layer having even better resistance to peeling is obtained. On the other hand, when the proportion constituted by the ethylenically unsaturated carboxylic acid monomer unit is not more than the upper limit set forth above, a slurry composition having further suppressed foaming is obtained.

The proportion constituted by each type of monomer unit in a polymer that is referred to in the present specification can be measured by $^1$H-NMR.

In the presently disclosed binder composition for a non-aqueous secondary battery negative electrode, the polymer preferably further includes an ethylenically unsaturated amide monomer unit. When the polymer further includes an ethylenically unsaturated amide monomer unit, a negative electrode having excellent flexibility is obtained.

In the presently disclosed binder composition for a non-aqueous secondary battery negative electrode, a proportion constituted by the ethylenically unsaturated amide monomer unit in the polymer is preferably not less than 1 mass% and not more than 18 mass%.

When the proportion constituted by the ethylenically unsaturated amide monomer unit is within the range set forth above, a negative electrode having even better flexibility is obtained.

Moreover, the present disclosure aims to solve the problems set forth above, and a presently disclosed slurry composition for a non-aqueous secondary battery negative electrode comprises: a negative electrode active material; and the binder composition for a non-aqueous secondary battery negative electrode set forth above. A slurry composition for a non-aqueous secondary battery negative electrode such as set forth above has suppressed foaming and is capable of forming a negative electrode mixed material layer having excellent resistance to peeling.

Furthermore, the present disclosure aims to solve the problems set forth above, and a presently disclosed negative electrode for a non-aqueous secondary battery comprises: a current collector; and a negative electrode mixed material layer located on the current collector, wherein the negative electrode mixed material layer is a layer formed through the slurry composition for a non-aqueous secondary battery negative electrode set forth above. In the case of a negative electrode for a non-aqueous secondary battery such as set forth above, the formation of pinholes in the negative electrode mixed material layer is inhibited, and resistance to peeling of the negative electrode mixed material layer is excellent.

Also, the present disclosure aims to solve the problems set forth above, and a presently disclosed non-aqueous secondary battery comprises a positive electrode, a negative electrode, a separator, and an electrolyte solution, wherein the negative electrode is the negative electrode for a non-aqueous secondary battery set forth above. In the case of a non-aqueous secondary battery such as set forth above, performance of the non-aqueous secondary battery can be maintained over a long period even upon repeated charging and discharging.

(Advantageous Effect)

According to the present disclosure, it is possible to provide a binder composition for a non-aqueous secondary battery negative electrode that is capable of producing a slurry composition having suppressed foaming and forming a negative electrode mixed material layer having excellent resistance to peeling.

Moreover, according to the present disclosure, it is possible to provide a slurry composition for a non-aqueous secondary battery negative electrode that contains this binder composition for a non-aqueous secondary battery negative electrode.

Furthermore, according to the present disclosure, it is possible to provide a negative electrode for a non-aqueous secondary battery that includes a negative electrode mixed material layer formed through this slurry composition for a non-aqueous secondary battery negative electrode.

Also, according to the present disclosure, it is possible to provide a non-aqueous secondary battery that includes this negative electrode for a non-aqueous secondary battery.

DETAILED DESCRIPTION

The following provides a detailed description of embodiments of the present disclosure.

The presently disclosed binder composition for a non-aqueous secondary battery negative electrode (hereinafter, also referred to simply as a "binder composition") can be used in production of a slurry composition for a non-aqueous secondary battery negative electrode (hereinafter, also referred to simply as a "slurry composition"). Moreover, the presently disclosed slurry composition for a non-aqueous secondary battery negative electrode can be used in production of a negative electrode for a non-aqueous secondary battery such as a lithium ion secondary battery (hereinafter, also referred to simply as a "negative electrode"). Furthermore, the presently disclosed negative electrode for a non-aqueous secondary battery can be used in a non-aqueous secondary battery.

(Binder composition for non-aqueous secondary battery negative electrode)

The presently disclosed binder composition for a non-aqueous secondary battery negative electrode contains a particulate binder and water.

<Particulate binder>

The particulate binder holds components such as a negative electrode active material in a negative electrode mixed material layer that is formed using a slurry composition containing the binder composition so that these components do not detach from the negative electrode mixed material layer.

The particulate binder includes a polymer including an ethylenically unsaturated carboxylic acid monomer unit, an aromatic vinyl monomer unit, and an aliphatic conjugated diene monomer unit. By using a particulate binder in which the polymer includes an ethylenically unsaturated carboxylic acid monomer unit, a negative electrode mixed material layer having excellent resistance to peeling can be formed. By using a particulate binder in which the polymer includes an aromatic vinyl monomer unit, a negative electrode having excellent cycle characteristics is obtained, and a negative electrode having excellent close adherence between a negative electrode mixed material layer and a current collector (hereinafter, also referred to simply as "close adherence") is obtained. By using a particulate binder in which the polymer includes an aliphatic conjugated diene monomer unit, a negative electrode having excellent flexibility is obtained.

The polymer preferably further includes an ethylenically unsaturated amide monomer unit. When the polymer further includes an ethylenically unsaturated amide monomer unit, a negative electrode having even better flexibility is obtained.

{Ethylenically unsaturated carboxylic acid monomer unit}

An ethylenically unsaturated carboxylic acid monomer that can form an ethylenically unsaturated carboxylic acid monomer unit typically does not include a hydroxyl group (-OH) other than a hydroxyl group in a carboxyl group.

Examples of ethylenically unsaturated carboxylic acid monomers include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids and acid anhydrides thereof. One ethylenically unsaturated carboxylic acid monomer may be used individually, or two or more ethylenically unsaturated carboxylic acid monomers may be used in combination in a freely selected ratio.

Examples of ethylenically unsaturated monocarboxylic acids include acrylic acid, methacrylic acid, and crotonic acid.

Examples of derivatives of ethylenically unsaturated monocarboxylic acids include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid.

Examples of ethylenically unsaturated dicarboxylic acids include maleic acid, fumaric acid, and itaconic acid.

Examples of acid anhydrides of ethylenically unsaturated dicarboxylic acids include maleic anhydride, diacrylic anhydride, methylmaleic anhydride, and dimethylmaleic anhydride.

Examples of derivatives of ethylenically unsaturated dicarboxylic acids include methylmaleic acid, phenylmaleic acid, chloromaleic acid, dichloromaleic acid, and fluoromaleic acid.

A monofunctional ethylenically unsaturated carboxylic acid monomer that includes one ethylenically unsaturated bond (C=C) in a molecule is preferable as an ethylenically unsaturated carboxylic acid monomer. Moreover, from a viewpoint of polymerizability, ethylenically unsaturated monocarboxylic acids and ethylenically unsaturated dicarboxylic acids are preferable as ethylenically unsaturated carboxylic acid monomers, acrylic acid, methacrylic acid, and itaconic acid are more preferable as ethylenically unsaturated carboxylic acid monomers, and acrylic acid and methacrylic acid are even more preferably as ethylenically unsaturated carboxylic acid monomers.

The proportion constituted by ethylenically unsaturated carboxylic acid monomer units in the polymer when the amount of all monomer units in the polymer is taken to be 100 mass% is preferably 2 mass% or more, more preferably 5 mass% or more, even more preferably 8 mass% or more, further preferably 11 mass% or more, and particularly preferably 13 mass% or more, and is preferably 35 mass% or less, more preferably 30 mass% or less, even more preferably 25 mass% or less, further preferably 23 mass% or less, and particularly preferably 21 mass% or less.

When the proportion constituted by ethylenically unsaturated carboxylic acid monomer units is not less than any of the lower limits set forth above, a negative electrode mixed material layer having even better resistance to peeling can be formed. On the other hand, when the proportion constituted by ethylenically unsaturated carboxylic acid monomer units is not more than any of the upper limits set forth above, a slurry composition having further suppressed foaming is obtained.

{Aromatic vinyl monomer unit}

Examples of aromatic vinyl monomers that can form an aromatic vinyl monomer unit include aromatic monovinyl compounds such as styrene, styrene sulfonic acid and salts thereof, $\alpha$-methylstyrene, p-t-butylstyrene, butoxystyrene, vinyltoluene, chlorostyrene, and vinylnaphthalene. Of these aromatic vinyl monomers, styrene and derivatives thereof are preferable. Although one of these aromatic vinyl monomers may be used individually or two or more of these aromatic vinyl monomers may be used in combination, it is preferable that one aromatic vinyl monomer is used individually.

The proportion constituted by aromatic vinyl monomer units in the polymer when the amount of all monomer units in the polymer is taken to be 100 mass% is preferably 12 mass% or more, more preferably 20 mass% or more, and even more preferably 21 mass% or more, and is preferably 70 mass% or less, more preferably 60 mass% or less, and even more preferably 40 mass% or less.

When the proportion constituted by aromatic vinyl monomer units is not less than any of the lower limits set forth above, a negative electrode having even better close adherence and even better cycle characteristics is obtained. On the other hand, when the proportion constituted by aromatic vinyl monomer units is not more than any of the upper limits set forth above, a negative electrode having excellent flexibility is obtained.

{Aliphatic conjugated diene monomer unit}

Examples of aliphatic conjugated diene monomers that can form an aliphatic conjugated diene monomer unit include aliphatic conjugated diene compounds having a carbon number of 4 or more such as 1,3-butadiene, isoprene, 2,3-dimethyl-1,3-butadiene, and 1,3-pentadiene. Of these aliphatic conjugated diene monomers, 1,3-butadiene and isoprene are preferable, and 1,3-butadiene is more preferable. Although one of these aliphatic conjugated diene monomers may be used individually or two or more of these aliphatic conjugated diene monomers may be used in combination, it is preferable that one aliphatic conjugated diene monomer is used individually. By forming an aliphatic conjugated diene monomer unit of the polymer using 1,3-butadiene, it is possible to increase dispersion stability and thermal stability of the obtained polymer.

The proportion constituted by aliphatic conjugated diene monomer units in the polymer when the amount of all monomer units in the polymer is taken to be 100 mass% is preferably 20 mass% or more, more preferably 30 mass% or more, and even more preferably 40 mass% or more, and is preferably 80 mass% or less, more preferably 70 mass% or less, even more preferably 59 mass% or less, and particularly preferably 55 mass% or less.

When the proportion constituted by aliphatic conjugated diene monomer units is not less than any of the lower limits set forth above, a negative electrode having even better flexibility is obtained. On the other hand, when the proportion constituted by aliphatic conjugated diene monomer units is not more than any of the upper limits set forth above, a negative electrode having excellent close adherence and excellent cycle characteristics is obtained.

{Ethylenically unsaturated amide monomer unit}

Examples of ethylenically unsaturated amide monomers that can form an ethylenically unsaturated amide monomer unit include amidated products (ethylenically unsaturated amide monomers) of the ethylenically unsaturated carboxylic acid monomers described above. For example, acrylamide, methacrylamide, and crotonamide are examples of amidated products (ethylenically unsaturated monoamide monomers) of ethylenically unsaturated monocarboxylic acids. Of these ethylenically unsaturated amide monomers, acrylamide and methacrylamide are preferable, and acrylamide is particularly preferable.

The proportion constituted by ethylenically unsaturated amide monomer units in the polymer when the amount of all monomer units in the polymer is taken to be 100 mass% is preferably 1 mass% or more, more preferably 1.5 mass% or more, even more preferably 3 mass% or more, and particularly preferably 4.7 mass% or more, and is preferably 18 mass% or less, more preferably 13 mass% or less, even more preferably 10 mass% or less, and particularly preferably 8 mass% or less.

When the proportion constituted by ethylenically unsaturated amide monomer units is within any of the numerical ranges set forth above, a negative electrode having even better flexibility is obtained.

{Other monomer units}

The polymer may include other monomer units to the extent that the object of the present disclosure is not lost. Examples of monomers that can form other monomer units include, but are not specifically limited to, nitrile group-containing monomers such as acrylonitrile and methacrylonitrile; and ethylenically unsaturated carboxylic acid ester monomers that are esterified products of the ethylenically unsaturated carboxylic acid monomers described above. Note that such ethylenically unsaturated carboxylic acid ester monomers are also inclusive of ethylenically unsaturated carboxylic acid ester monomers that include a hydroxyalkyl group such as hydroxyethyl (meth)acrylate, hydroxypropyl (meth)acrylate, and hydroxybutyl (meth)acrylate.

Also note that in the present specification, "(meth)acrylate" indicates "acrylate" and/or "methacrylate".

{Properties of particulate binder}

When a film of the particulate binder of the presently disclosed binder composition is formed, this film has a degree of swelling of insoluble content in tetrahydrofuran (THF) (hereinafter, also referred to simply as a "degree of swelling") of not less than 300 mass% and not more than 1500 mass% and has an amount of insoluble content in tetrahydrofuran (hereinafter, also referred to simply as an "amount of insoluble content") of not less than 85 mass% and not more than 99 mass%.

The degree of swelling and the amount of insoluble content can be dependent on the cross-linking point density and the number of cross-links in the polymer that is included in the particulate binder. Specifically, as the cross-linking point density and the number of cross-links increase, a reticulated structure of the polymer becomes finer, the degree of swelling decreases, and the amount of insoluble content increases. On the other hand, as the cross-linking point density and the number of cross-links decrease, the reticulated structure of the polymer becomes coarser, the degree of swelling increases, and the amount of insoluble content decreases. Accordingly, in the case of the particulate binder that has a degree of swelling and an amount of insoluble content that are within the ranges set forth above, the polymer has a good reticulated structure, and, as a result, the presently disclosed binder composition that contains this particulate binder is capable of producing a slurry composition having suppressed foaming and forming a negative electrode mixed material layer having excellent resistance to peeling. Moreover, when the degree of swelling and amount of insoluble content of the particulate binder are within the ranges set forth above, a negative electrode having excellent close adherence is obtained.

Note that the degree of swelling and amount of insoluble content can be adjusted through the used amounts of a molecular weight modifier and monomers, the polymerization conditions, and so forth in production of the particulate binder.

The degree of swelling is preferably 350 mass% or more, more preferably 400 mass% or more, and even more preferably 500 mass% or more, and is preferably 1400 mass% or less, more preferably 1200 mass% or less, and even more preferably 1000 mass% or less.

When the degree of swelling is not less than any of the lower limits set forth above, a negative electrode having even better close adherence is obtained. On the other hand, when the degree of swelling is not more than any of the upper limits set forth above, a negative electrode mixed material layer having even better resistance to peeling can be formed.

The amount of insoluble content is preferably 86 mass% or more, more preferably 87 mass% or more, and even more preferably 88 mass% or more, and is preferably 96 mass% or less, more preferably 94 mass% or less, and even more preferably 92 mass% or less.

When the amount of insoluble content is not less than any of the lower limits set forth above, a slurry composition having further suppressed foaming is obtained. On the other hand, when the amount of insoluble content is not more than any of the upper limits set forth above, a negative electrode having even better close adherence is obtained.

The volume-average particle diameter (D50) of the particulate binder is preferably 30 nm or more, more preferably 50 nm or more, and even more preferably 100 nm or more, and is preferably 1,000 nm or less, more preferably 700 nm or less, and even more preferably 500 nm or less.

When the volume-average particle diameter (D50) of the particulate binder is within any of the ranges set forth above, a negative electrode having even better close adherence is obtained.

Note that the "volume-average particle diameter (D50)" referred to in the present specification is the particle diameter at which, in a particle size distribution (by volume) measured by laser diffraction, cumulative volume calculated from a small diameter end of the distribution reaches 50%.

{Production method of particulate binder}

The polymer that is included in the particulate binder can be polymerized according to a known polymerization method such as solution polymerization, suspension polymerization, bulk polymerization, or emulsion polymerization, for example. Of these polymerization methods, emulsion polymerization is preferable because it is easy to adjust the degree of swelling and amount of insoluble content.

The polymerization reaction may be addition polymerization such as ionic polymerization, radical polymerization, or living radical polymerization.

It is preferable that a molecular weight modifier (chain transfer agent) is contained in the polymerization system during the polymerization reaction because this enables adjustment of the degree of swelling and amount of insoluble content to within preferable ranges.

Examples of molecular weight modifiers that may be used include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide and diisopropyl xanthogen disulfide; terpinolene; thiuram compounds such as tetramethyl thiuram disulfide, tetraethylthiuram disulfide, and tetramethylthiuram monosulfide; phenolic compounds such as 2,6-di-t-butyl-4-methylphenol and styrenated phenol; allyl compounds such as allyl alcohol; halogenated hydrocarbon compounds such as dichloromethane and dibromomethane; thio compounds such as thioglycolic acid, thiomalic acid, and 2-ethylhexyl thioglycolate; diphenylethylene; and $\alpha$-methylstyrene dimer. Of these molecular weight modifiers, t-dodecyl mercaptan is preferable.

One of the molecular weight modifiers described above may be used individually, or two or more of the molecular weight modifiers described above may be used in combination in a freely selected ratio.

The used amount of the molecular weight modifier is preferably 0.03 parts by mass or more, more preferably 0.1 parts by mass or more, and even more preferably 0.3 parts by mass or more relative to 100 parts by mass of the used amount of monomers, and is preferably 2.0 parts by mass or less, more preferably 1.8 parts by mass or less, even more preferably 1.0 parts by mass or less, and particularly preferably 0.8 parts by mass or less relative to 100 parts by mass of the used amount of monomers.

When the used amount of the molecular weight modifier is within any of the ranges set forth above, the degree of swelling and amount of insoluble content can easily be adjusted to within preferable ranges.

Besides the molecular weight modifier, typically used additives such as emulsifiers, dispersants, polymerization initiators, and polymerization aids can also be used in the polymerization reaction. The used amounts of these additives can be set as typically used amounts.

The maximum temperature during the polymerization reaction is preferably higher than 80°C, and more preferably 85°C or higher, and is preferably lower than 100°C, and more preferably 95°C or lower.

When the maximum temperature is within any of the ranges set forth above, the degree of swelling and amount of insoluble content can be adjusted to within preferable ranges.

The duration of a temperature exceeding 80°C in the polymerization reaction is preferably 1 hour or more, more preferably 2 hours or more, and even more preferably 3 hours or more, and is preferably 7 hours or less, more preferably 6 hours or less, and even more preferably 5 hours or less. This temperature may be 85°C or higher, may be lower than 100°C, or may be 95°C or lower.

When the duration of this temperature is within any of the ranges set forth above, the degree of swelling and amount of insoluble content can be adjusted to within preferable ranges.

<Solvent>

The presently disclosed binder composition is required to contain water as a solvent and may contain a small amount of an organic solvent in addition to the water.

<Other components>

The presently disclosed binder composition may contain components other than the above-described components (i.e., may contain other components) to the extent that the object of the present disclosure is not lost. Examples of such other components include antioxidants, defoamers, and dispersants.

One other component may be used individually, or two or more other components may be used in combination in a freely selected ratio.

<Production method of binder composition>

The presently disclosed binder composition can be produced by mixing the particulate binder, other components that are optionally used, and so forth in the presence of water without any specific limitations. Note that in a situation in which a dispersion liquid of the particulate binder is used in production of the binder composition, liquid content of the dispersion liquid may be used in that form as a medium of the binder composition.

<Properties of binder composition>

The presently disclosed binder composition has a ratio of viscosity at pH 8.0 relative to viscosity at pH 3.0 (viscosity ratio $\alpha$) of not less than 1.5 and not more than 200 when set to a solid content concentration of 30 mass%.

The viscosity ratio $\alpha$ can be dependent on the proportion constituted by ethylenically unsaturated carboxylic acid monomer units in the polymer that is included in the particulate binder. Moreover, in a case in which the polymer includes an ethylenically unsaturated amide monomer unit, the viscosity ratio $\alpha$ is also dependent on the proportion constituted by ethylenically unsaturated amide monomer units. Specifically, as the proportion constituted by ethylenically unsaturated carboxylic acid monomer units and optional ethylenically unsaturated amide monomer units in the polymer increases, the proportion constituted by carboxyl groups and optional amide groups in the polymer increases, and the viscosity ratio $\alpha$ increases. On the other hand, when the proportion constituted by ethylenically unsaturated carboxylic acid monomer units and optional ethylenically unsaturated amide monomer units in the polymer decreases, the proportion constituted by carboxyl groups and optional amide groups in the polymer decreases, and the viscosity ratio $\alpha$ decreases. Accordingly, carboxyl groups and optional amide groups constitute a good proportion in the particulate binder that has a viscosity ratio $\alpha$ within the range set forth above, and, as a result, the presently disclosed binder composition that contains this particulate binder is capable of producing a slurry composition having suppressed foaming and forming a negative electrode mixed material layer having excellent resistance to peeling.

The viscosity ratio $\alpha$ is preferably 3 or more, more preferably 5 or more, and even more preferably 7 or more, and is preferably 150 or less, more preferably 100 or less, and even more preferably 20 or less.

When the viscosity ratio $\alpha$ is not less than any of the lower limits set forth above, a negative electrode mixed material layer having even better resistance to peeling is obtained. On the other hand, when the viscosity ratio $\alpha$ is not more than any of the upper limits set forth above, a slurry composition having further suppressed foaming is obtained. Moreover, when the viscosity ratio $\alpha$ is within any of the ranges set forth above, a negative electrode having excellent flexibility is obtained.

Although no specific limitations are made so long as the viscosity ratio $\alpha$ is within any of the ranges set forth above, the viscosity of the binder composition at pH 3.0 when set to a solid content concentration of 30 mass% is 10 mPa·s or more, for example, and may be 15 mPa·s or more. On the other hand, the viscosity at pH 3.0 is 50 mPa·s or less, for example, and may be 30 mPa·s or less.

Although no specific limitations are made so long as the viscosity ratio $\alpha$ is within any of the ranges set forth above, the viscosity of the binder composition at pH 8.0 when set to a solid content concentration of 30 mass% is 25 mPa·s or more, for example, and may be 50 mPa·s or more, may be 100 mPa·s or more, or may be 200 mPa·s or more. On the other hand, the viscosity at pH 8.0 is 4,500 mPa·s or less, for example, and may be 3,000 mPa·s or less, may be 2,000 mPa·s or less, may be 1,000 mPa·s or less, or may be 500 mPa·s or less.

In one embodiment, a ratio of viscosity at pH 9.0 relative to viscosity at pH 4.0 (viscosity ratio $\beta$) of the binder composition when set to a solid content concentration of 20 mass% is preferably 0.2 or more, more preferably 0.3 or more, even more preferably 0.5 or more, further preferably 1.2 or more, and particularly preferably 1.3 or more, and is preferably less than 10, more preferably less than 5, even more preferably less than 3, further preferably 1.8 or less, and particularly preferably 1.6 or less.

When the viscosity ratio $\beta$ is not less than any of the lower limits set forth above, a negative electrode mixed material layer having even better resistance to peeling can be formed. On the other hand, when the viscosity ratio $\beta$ is not more than any of the upper limits set forth above, a slurry composition having further suppressed foaming is obtained. Moreover, when the viscosity ratio $\beta$ is within any of the ranges set forth above, a negative electrode having excellent flexibility is obtained.

The viscosity at pH 4.0 and viscosity at pH 9.0 that are referred to in the present specification are calculated in accordance with a method described in the EXAMPLES section of the present specification.

Although no specific limitations are made, the viscosity of the binder composition at pH 4.0 when set to a solid content concentration of 20 mass% is 15 mPa·s or more, for example, and may be 20 mPa·s or more. On the other hand, the viscosity at pH 4.0 is 40 mPa·s or less, for example, and may be 30 mPa·s or less.

Although no specific limitations are made, the viscosity of the binder composition at pH 9.0 when set to a solid content concentration of 20 mass% is 16 mPa·s or more, for example, and may be 21 mPa·s or more, or may be 25 mPa·s or more. On the other hand, the viscosity at pH 9.0 is 80 mPa·s or less, for example, and may be 50 mPa·s or less, may be 40 mPa·s or less, or may be 35 mPa·s or less.

Note that the viscosity at each pH described above can be adjusted through the used amounts of an ethylenically unsaturated carboxylic acid monomer and an optional ethylenically unsaturated amide monomer in production of the polymer that is included in the particulate binder, for example.

(Slurry composition for non-aqueous secondary battery negative electrode)

The presently disclosed slurry composition for a non-aqueous secondary battery negative electrode is a composition used for forming a negative electrode mixed material layer of a negative electrode, contains the binder composition for a non-aqueous secondary battery negative electrode set forth above, and further contains a negative electrode active material. In other words, the presently disclosed slurry composition contains a particulate binder, a negative electrode active material, and water, and can optionally further contain other components. The presently disclosed slurry composition has suppressed foaming and is capable of forming a negative electrode mixed material layer having excellent resistance to peeling as a result of containing the presently disclosed binder composition.

<Binder composition>

The presently disclosed binder composition that contains a specific particulate binder and water is used as the binder composition.

Note that no specific limitations are placed on the amount of the binder composition that is compounded in the slurry composition. The amount of the binder composition is 0.5 parts by mass or more, for example, and may be 0.7 parts by mass or more in terms of solid content relative to 100 parts by mass of all solid content in the slurry composition, and the amount of the binder composition is 15 parts by mass or less, for example, and may be 5 parts by mass or less in terms of solid content relative to 100 parts by mass of all solid content in the slurry composition.

<Negative electrode active material>

Any known negative electrode active material that is used in secondary batteries can be used without any specific limitations as the negative electrode active material. For example, examples of negative electrode active materials that can be used in a negative electrode mixed material layer of a lithium ion secondary battery, which is one example of a secondary battery, include carbon-based negative electrode active materials, metal-based negative electrode active materials, and negative electrode active materials that are a combination thereof without any specific limitations.

The term "carbon-based negative electrode active material" refers to an active material that has carbon as a main framework allowing insertion (also referred to as "doping") of lithium. Specific examples of carbon-based negative electrode active materials include carbonaceous materials such as coke, mesocarbon microbeads (MCMB), mesophase pitch-based carbon fiber, pyrolytic vapor-grown carbon fiber, pyrolyzed phenolic resin, polyacrylonitrile-based carbon fiber, quasi-isotropic carbon, pyrolyzed furfuryl alcohol resin (PFA), and hard carbon, and graphitic materials such as natural graphite and artificial graphite.

The term "metal-based negative electrode active material" refers to an active material that contains metal, the structure of which usually contains an element that allows insertion of lithium, and that has a theoretical electric capacity per unit mass of 500 mAh/g or more when lithium is inserted. Examples of metal-based active materials include lithium metal, simple substances of metals that can form a lithium alloy (for example, Ag, Al, Ba, Bi, Cu, Ga, Ge, In, Ni, P, Pb, Sb, Si, Sn, Sr, Zn, and Ti), and oxides, sulfides, nitrides, silicides, carbides, and phosphides thereof. Moreover, an oxide such as lithium titanate can be used.

From a viewpoint of improving the capacity of a secondary battery, it is preferable that at least a metal-based negative electrode active material is included, and more preferable that a Si-containing negative electrode active material is included. It should be noted that although these negative electrode active materials display a particularly large degree of expansion and contraction during charging and discharging, the presently disclosed binder makes it possible to effectively inhibit peeling of a negative electrode mixed material layer that contains any of these negative electrode active materials.

One of the negative electrode active materials described above may be used individually, or two or more of the negative electrode active materials described above may be used in combination.

<Other components>

Examples of other components that can be compounded in the slurry composition include, but are not specifically limited to, thickeners, conductive materials, and the same components as other components that can be compounded in the presently disclosed binder composition. For example, carboxymethyl cellulose, a lithium salt of an acrylic acid/acrylamide/hydroxyethylacrylamide copolymer, or the like, may be used as a thickener. One other component may be used individually, or two or more other components may be used in combination in a freely selected ratio.

<Production of slurry composition>

No specific limitations are placed on the method by which the slurry composition is produced.

For example, the slurry composition can be produced by mixing the binder composition, the negative electrode active material, and other components that are used as necessary in the presence of water.

Note that a medium used in production of the slurry composition is inclusive of a medium that was contained in the binder composition. The mixing method is not specifically limited and can be mixing using a typically used stirrer or disperser.

(Negative electrode for non-aqueous secondary battery)

The presently disclosed negative electrode for a non-aqueous secondary battery includes a current collector and a negative electrode mixed material layer located on the current collector, wherein the negative electrode mixed material layer is a layer formed using the slurry composition for a non-aqueous secondary battery negative electrode set forth above. As a result of the negative electrode mixed material layer in the presently disclosed negative electrode being formed using the presently disclosed slurry composition, the formation of pinholes in the negative electrode mixed material layer is inhibited, and resistance to peeling of the negative electrode mixed material layer is excellent.

<Negative electrode mixed material layer>

The negative electrode mixed material layer is formed of a dried product of the presently disclosed slurry composition, normally contains a negative electrode active material and a component derived from a particulate binder, and can optionally further contain other components. Note that components contained in the negative electrode mixed material layer are components that were contained in the presently disclosed slurry composition and that the preferred ratio of these components is the same as the preferred ratio of the components in the slurry composition. Also note that although the binder is present in a particulate form in the binder composition and the slurry composition, the binder may have a particulate form or may have any other form in the negative electrode mixed material layer that is formed using the slurry composition.

<Current collector>

The current collector of the negative electrode is a material having electrical conductivity and electrochemical durability. Specifically, the current collector may, for example, be made of iron, copper, aluminum, nickel, stainless steel, titanium, tantalum, gold, platinum, or the like. Copper foil is particularly preferable as the current collector of the negative electrode. One of these materials may be used individually, or two or more of these materials may be used in combination in a freely selected ratio.

<Production method of negative electrode>

The negative electrode mixed material layer of the presently disclosed negative electrode can be formed using any of the following methods, for example.

(1) A method in which the presently disclosed slurry composition is applied onto the current collector and is then dried
(2) A method in which the current collector is immersed in the presently disclosed slurry composition and is then dried
(3) A method in which the presently disclosed slurry composition is applied onto a releasable substrate and is dried to produce a negative electrode mixed material layer that is then transferred onto the surface of the current collector

Of these methods, method (1) is particularly preferable since it allows simple control of the thickness of the negative electrode mixed material layer. In more detail, method (1) includes a step of applying the slurry composition onto the current collector (application step) and a step of drying the slurry composition that has been applied onto the current collector to form a negative electrode mixed material layer on the current collector (drying step).

{Application step}

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto just one side of the current collector or may be applied onto both sides of the current collector. The thickness of the slurry coating on the current collector after application but before drying can be set as appropriate in accordance with the thickness of the negative electrode mixed material layer to be obtained after drying.

{Drying step}

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. By drying the slurry composition on the current collector in this manner, it is possible to form a negative electrode mixed material layer on the current collector and thereby obtain a negative electrode that includes the current collector and the negative electrode mixed material layer located on the current collector.

After the drying step, the negative electrode mixed material layer may be further subjected to a pressing process by mold pressing, roll pressing, or the like. This pressing process can improve close adherence between the negative electrode mixed material layer and the current collector and enables further densification of the obtained negative electrode mixed material layer. Furthermore, in a case in which the negative electrode mixed material layer contains a curable polymer, this polymer is preferably cured after formation of the negative electrode mixed material layer.

(Non-aqueous secondary battery)

The presently disclosed non-aqueous secondary battery includes a positive electrode, a negative electrode, an electrolyte solution, and a separator, wherein the negative electrode is the negative electrode for a non-aqueous secondary battery set forth above. As a result of the presently disclosed secondary battery including the presently disclosed negative electrode, performance of the secondary battery can be maintained over a long period even upon repeated charging and discharging.

Although the following describes, as one example, a case in which the secondary battery is a lithium ion secondary battery, the presently disclosed secondary battery is not limited to the following example.

Since the negative electrode has already been described above, description thereof is omitted below.

<Positive electrode>

Any known positive electrode that is used in a secondary battery can be used without any specific limitations as the positive electrode that is included in the presently disclosed secondary battery. Specifically, a positive electrode obtained by forming a positive electrode mixed material layer on a current collector by a known production method can be used as the positive electrode.

Any known positive electrode active material that is used in a secondary battery can be used without any specific limitations as a positive electrode active material that is compounded in the positive electrode mixed material layer.

For example, a compound that includes a transition metal such as a transition metal oxide, a transition metal sulfide, or a complex metal oxide of lithium and a transition metal can be used as the positive electrode active material that is compounded in the positive electrode mixed material layer. Examples of the transition metal include Ti, V, Cr, Mn, Fe, Co, Ni, Cu, and Mo.

Specific examples of positive electrode active materials that may be used include, but are not specifically limited to, lithium-containing cobalt oxide ($LiCoO_2$), lithium manganate ($LiMn_2O_4$), lithium-containing nickel oxide ($LiNiO_2$), a lithium-containing complex oxide of Co-Ni-Mn such as $LiNi_{5/10}Co_{2/10}Mn_{3/10}O_2$ (NMC532), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a lithium-rich spinel compound represented by $Li_{1+x}Mn_{2-x}O_4$ (0 < x < 2), $Li[Ni_{0.17}Li_{0.2}Co_{0.07}Mn_{0.56}]O_2$, and $LiNi_{0.5}Mn_{1.5}O_4$.

One of the positive electrode active materials described above may be used individually, or two or more of the positive electrode active materials described above may be used in combination.

The current collector of the positive electrode may be any of the materials that were previously described for the current collector of the negative electrode. Aluminum foil is particularly preferable as the current collector of the positive electrode. The material used as the current collector of the positive electrode may be one type of material used individually or may be two or more types of materials used in combination in a freely selected ratio.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferred as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that may suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives can be added to the electrolyte solution.

<Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferable in terms that the thickness of the overall separator can be reduced, thereby increasing the ratio of electrode active material inside the secondary battery and increasing the volumetric capacity.

<Production method of secondary battery>

The presently disclosed secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. Note that the presently disclosed negative electrode is used in the presently disclosed secondary battery. The presently disclosed secondary battery may be provided with an overcurrent preventing device such as a fuse or a PTC device; an expanded metal; a lead plate; or the like, as necessary, in order to prevent pressure increase inside the secondary battery and occurrence of overcharging or overdischarging. The shape of the secondary battery may be a coin type, button type, sheet type, cylinder type, prismatic type, flat type, or the like, for example.

EXAMPLES

The following provides a more specific description of the present disclosure based on examples. However, the present disclosure is not limited to these examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of that polymer.

In the examples and comparative examples, various evaluations and measurements were performed as follows.

<Evaluation of foaming of slurry composition>

Each slurry composition produced in the examples and comparative examples was loaded, in an amount of 100 g, into a vessel having an internal diameter of 6 cm and was stirred at 2,000 rpm for 5 minutes using a disper having a sawtooth disc turbine blade of 3 cm in diameter attached thereto. Thereafter, the slurry composition was loaded into a case for pressurization, the internal pressure of the case (gauge pressure) was set to 0.1 MPa with nitrogen gas, and this state was maintained for 3 minutes. The slurry composition was removed from the case, and then a ×20 magnifying glass was used to count the number of bubbles of 0.1 mm or more in diameter that were present across the entire liquid surface of the slurry composition. A smaller number of bubbles indicates that foaming of the slurry composition is suppressed.

A: Number of bubbles is 1 or less
B: Number of bubbles is not less than 2 and less than 6
C: Number of bubbles is not less than 6 and less than 10
D: Number of bubbles is not less than 10 and less than 12
E: Number of bubbles is 12 or more

<Evaluation of peel strength of negative electrode (close adherence between negative electrode mixed material layer and copper foil (current collector))>

Each negative electrode produced in the examples and comparative examples was cut out as a rectangular shape of 1 cm in width by 8 cm in length to obtain a test specimen. Next, the test specimen was fixed with the surface of the negative electrode mixed material layer facing upward. Cellophane tape (tape in accordance with JIS Z1522) was then affixed to the entire surface of the negative electrode mixed material layer of the test specimen. This cellophane tape was peeled off from one end of the test specimen in a direction at 180° and at a speed of 50 mm/min, and the stress during this peeling was measured. Five measurements were performed in the same manner, and an average value of the measurements was taken to be the peel strength. The peel strength was judged by the following standard. A higher peel strength indicates better close adherence between the negative electrode mixed material layer and the current collector.

A: Peel strength of 3.5 N/m or more
B: Peel strength of not less than 3.0 N/m and less than 3.5 N/m
C: Peel strength of not less than 2.5 N/m and less than 3.0 N/m
D: Peel strength of not less than 2.0 N/m and less than 2.5 N/m
E: Peel strength of less than 2.0 N/m

<Evaluation of flexibility of negative electrode>

Each negative electrode produced in the examples and comparative examples was cut out as a rectangle of 1 cm in width by 8 cm in length to obtain a test specimen. Next, a plurality of metal rods of different diameters were prepared, and the test specimen was wound around each of these metal rods with the copper foil of the test specimen at the metal rod-side. A visual check was made for cracking of the mixed material layer in the wound test specimen. The absence of cracking with a metal rod of smaller diameter indicates better flexibility.

A: No cracking with metal rod diameter of 4.0 mm
B: No cracking with metal rod diameter of 5.0 mm, but cracking with metal rod diameter of 4.0 mm
C: No cracking with metal rod diameter of 6.0 mm, but cracking with metal rod diameter of 5.0 mm
D: No cracking with metal rod diameter of 7.0 mm, but cracking with metal rod diameter of 6.0 mm
E: Cracking with metal rod diameter of 7.0 mm

<Evaluation of cycle characteristics of secondary battery>

Each secondary battery produced in the examples and comparative examples was used to evaluate cycle characteristics.

Specifically, the secondary battery was first left at rest at a temperature of 25°C for 6 hours. Next, the secondary battery was charged by a 0.1C constant-current method for 100 minutes in an environment having a temperature of 25°C. The secondary battery was then subjected to 12 hours of aging in an environment having a temperature of 60°C. Next, a charge/discharge operation of charging to a cell voltage of 4.20 V and discharging to a cell voltage of 2.75 V by a 0.5C constant-current method was performed in a 25°C environment, and the initial capacity C0 was measured. This charging and discharging was further repeated, and the capacity C1 after 50 cycles was measured. A capacity maintenance rate C2 was calculated according to the following calculation formula.

$$C2\ (\%) = (C1/C0) \times 100$$

A larger value for the capacity maintenance rate C2 indicates better cycle characteristics.

A: Capacity maintenance rate C2 of 90% or more
B: Capacity maintenance rate C2 of not less than 85% and less than 90%
C: Capacity maintenance rate C2 of not less than 80% and less than 85%
D: Capacity maintenance rate C2 of not less than 75% and less than 80%
E: Capacity maintenance rate C2 of less than 75%

<Evaluation of resistance to peeling of negative electrode mixed material layer>

Each secondary battery produced in the examples and comparative examples was used to evaluate resistance to peeling.

Specifically, the secondary battery was first subjected to aging in the same manner as in evaluation of cycle characteristics described above. Next, the secondary battery was charged to 4.2 V at 0.2C and discharged to 3.0 V at 0.2C in a 25°C environment. The cell was then dismantled in order to take out a negative electrode. The negative electrode that had been taken out was then washed with diethyl carbonate, and the surface of the negative electrode was visually inspected and was evaluated by the following standard. Less cracking and peeling of the negative electrode surface indicates that performance of the secondary battery can be maintained over a long period even upon repeated charging and discharging.

A: Cracking and peeling not observed across entire negative electrode surface or area where cracking and/or peeling is observed is less than 10% of entire negative electrode surface
B: Cracking and/or peeling observed for not less than 10% and less than 15% of area of entire negative electrode surface
C: Cracking and/or peeling observed for not less than 15% and less than 25% of area of entire negative electrode surface
D: Cracking and/or peeling observed for not less than 25% and less than 30% of area of entire negative electrode surface
E: Cracking and/or peeling observed for 30% or more of area of entire negative electrode surface

<Calculation of viscosity ratio α>

Each binder composition produced in the examples and comparative examples was used to calculate a ratio (viscosity ratio $\alpha$) of viscosity ($\eta_8$) at pH 8.0 relative to viscosity ($\eta_3$) at pH 3.0.

Specifically, the binder composition was adjusted to a solid content concentration of 30% and pH of 3.0, and then a B-type viscometer was used to measure the viscosity $\eta_3$ (units: mPa·s) under conditions of a temperature of 25°C, a spindle rotation speed of 60 rpm, and a spindle rotation time of 60 seconds. Next, the viscosity $\eta_8$ was measured under the same conditions with the exception that the pH was adjusted to 8.0. The viscosity ratio $\alpha$ was calculated according to the following calculation formula.

$$\alpha = \eta_8/\eta_3$$

Note that the pH adjustment was performed through dropwise addition of 5% sodium hydroxide aqueous solution and using an electrode-type pH meter. Moreover, adjustment of the solid content concentration of the binder composition was performed through addition of deionized water.

<Calculation of viscosity ratio $\beta$>

Each binder composition produced in the examples and comparative examples was used to calculate a ratio (viscosity ratio $\beta$) of viscosity ($\eta_9$) at pH 9.0 relative to viscosity ($\eta_4$) at pH 4.0.
Specifically, the binder composition was first adjusted to a solid content concentration of 20%, and then a B-type viscometer was used to measure the viscosity $\eta_4$ under conditions of a temperature of 25°C, a pH of 4.0, a spindle rotation speed of 60 rpm, and a spindle rotation time of 60 seconds. Next, the viscosity $\eta_9$ was measured under the same conditions with the exception that the pH was adjusted to 9.0. The viscosity ratio $\beta$ was calculated according to the following calculation formula.

$$\beta = \eta_9/\eta_4$$

Note that the pH adjustment was performed through dropwise addition of 5% sodium hydroxide aqueous solution and using an electrode-type pH meter. Moreover, adjustment of the solid content concentration of the binder composition was performed through addition of deionized water.

<Calculation of degree of swelling and amount of insoluble content in tetrahydrofuran (THF)>

Each binder composition produced in the examples and comparative examples was dripped into a petri dish such that there was 1.5 g of solid content. Next, 24 hours of drying was performed in a 22°C to 25°C environment, and then a further 1 hour of drying was performed at 110°C to obtain a film of a particulate binder. Next, this film was cut up into 2.5 mm squares, and approximately 0.3 g thereof were precisely weighed. The mass of the film pieces obtained through cutting was taken to be WO. Next, the film pieces were immersed in 80 mL of THF at 25°C for 24 hours. The film pieces were then pulled out of the THF, and the mass W1 of the film pieces was measured. Next, these film pieces were vacuum dried at 105°C for 3 hours, and the mass W2 of the film pieces was measured. The degree of swelling (mass%) of insoluble content in THF was calculated according to the following formula.

$$\text{Degree of swelling (mass\%)} = (W1/W2) \times 100$$

In addition, the amount of insoluble content (mass%) in THF was calculated by the following formula.

$$\text{Amount of insoluble content (mass\%)} = (W2/W0) \times 100$$

(Example 1)

<Production of binder composition for secondary battery negative electrode>

A 5 MPa pressure-resistant vessel A equipped with a stirrer was charged with 2.18 parts of styrene as an aromatic vinyl monomer, 1.66 parts of 1,3-butadiene as an aliphatic conjugated diene monomer, 0.116 parts of methacrylic acid as an ethylenically unsaturated carboxylic acid monomer, 0.23 parts of sodium dodecyl diphenyl ether disulfonate as an emulsifier, 15 parts of deionized water, and 0.017 parts of potassium persulfate as a polymerization initiator to obtain a mixture A. The mixture A was thoroughly stirred, was then heated to 57°C to initiate polymerization, and was caused to react for 5 hours. Thereafter, the temperature was set to 70°C, and a further 4 hours of reaction was performed to yield seed particles.

Separately to the above, a 5 MPa pressure-resistant vessel B equipped with a stirrer was charged with 20.704 parts of styrene as an aromatic vinyl monomer, 50.34 parts of 1,3-butadiene as an aliphatic conjugated diene monomer, 18 parts of acrylic acid as an ethylenically unsaturated carboxylic acid monomer, 7 parts of acrylamide as an ethylenically unsaturated amide monomer, 0.5 parts of tert-dodecyl mercaptan as a molecular weight modifier, 0.20 parts of sodium dodecyl diphenyl ether disulfonate as an emulsifier, and 44 parts of deionized water to obtain a mixture B.

The contents of the pressure-resistant vessel A after the seed particles had been obtained were heated to a temperature of 75°C, and the mixture B was added into the pressure-resistant vessel A over 5 hours. Simultaneously thereto, addition of 0.5 parts of potassium persulfate as a polymerization initiator into the pressure-resistant vessel A was initiated so as to initiate polymerization. Note that the overall monomer composition was 22.884 parts of styrene, 52 parts of 1,3-butadiene, 18 parts of acrylic acid, 7 parts of acrylamide, and 0.116 parts of methacrylic acid.

Once addition of the total amount of the mixture B was complete, the temperature was raised to 90°C and a reaction was performed for 4 hours.

At the point at which the polymerization conversion rate reached 97%, cooling was performed to quench the reaction to yield a mixture containing a polymer. Next, this mixture was adjusted to pH 8 through addition of 5% sodium hydroxide aqueous solution. Unreacted monomer was subsequently removed through thermal-vacuum distillation. Next, the resultant residue was further cooled to yield a binder composition for a secondary battery negative electrode containing a desired particulate polymer (particulate binder; volume-average particle diameter (D50): 150 nm).

The obtained binder composition for a secondary battery negative electrode was used to calculate the viscosity ratio $\alpha$, the viscosity ratio $\beta$, and the degree of swelling and amount of insoluble content in tetrahydrofuran (THF). The results are shown in Table 1.

<Production of slurry composition for secondary battery negative electrode>

A planetary mixer equipped with a disper was charged with 90.2 parts of artificial graphite and 6.8 parts of $SiO_x$ as negative electrode active materials and 2.0 parts (in terms of solid content) of sodium carboxymethyl cellulose aqueous solution as a thickener A. These materials were diluted to a solid content concentration of 61.5% with deionized water and were subsequently mixed at room temperature for 40 minutes. Next, these materials were diluted stepwise to solid content concentrations of 56% and 51% with deionized water, and then 1.0 parts (in terms of solid content) of the binder composition for a secondary battery negative electrode was added to obtain a mixture. The obtained mixture was subjected to defoaming under reduced pressure to obtain a slurry composition for a secondary battery negative electrode having good fluidity.

Foaming was evaluated for the obtained slurry composition for a secondary battery negative electrode. The result is shown in Table 1.

<Production of negative electrode for secondary battery>

The slurry composition for a secondary battery negative electrode was applied onto copper foil (current collector) of 16 $\mu$m in thickness by a comma coater such as to having a coating weight after drying of 10 mg/cm$^2$. Next, the copper foil with the slurry composition for a secondary battery negative electrode applied thereon was conveyed inside an oven having a temperature of 75°C for 2 minutes and inside an oven having a temperature of 120°C for 2 minutes at a speed of 0.5 m/min so as to dry the slurry composition for a secondary battery negative electrode on the copper foil and obtain a negative electrode web having a negative electrode mixed material layer formed on the copper foil. Next, the negative electrode web was rolled by roll pressing to obtain a negative electrode for a secondary battery having a negative electrode mixed material layer thickness of 80 $\mu$m.

Peel strength and flexibility were evaluated for the obtained negative electrode for a secondary battery. The results are shown in Table 1.

<Production of positive electrode for secondary battery>

A slurry composition for a secondary battery positive electrode was obtained by loading 96 parts of lithium nickel manganese cobalt oxide as a positive electrode active material, 2 parts (in terms of solid content) of PVDF (polyvinylidene fluoride) as a binder for a secondary battery positive electrode, 2 parts of acetylene black as a conductive material, and 20 parts of N-methylpyrrolidone as a solvent into a planetary mixer and mixing these materials.

The obtained slurry composition for a secondary battery positive electrode was applied onto aluminum foil (current collector) of 16 $\mu$m in thickness by a comma coater such as to have a coating weight after drying of 24.5 mg/cm$^2$. Next, the aluminum foil having the slurry composition for a secondary battery positive electrode applied thereon was conveyed inside an oven having a temperature of 60°C for 2 minutes and an oven having a temperature of 120°C for 2 minutes at a speed of 0.5 m/min so as to dry the slurry composition for a secondary battery positive electrode on the aluminum foil and obtain a positive electrode web having a positive electrode mixed material layer formed on the aluminum foil. Next, the positive electrode web was rolled by roll pressing to obtain a positive electrode for a secondary battery having a positive electrode mixed material layer thickness of 70 $\mu$m.

<Preparation of separator for secondary battery>

A separator made of a single layer of polypropylene (width 65 mm, length 500 mm, thickness 25 $\mu$m; produced by dry method; porosity 55%) was cut out as a square of 5 cm $\times$ 5 cm to prepare a separator for a secondary battery. This separator for a secondary battery was used in the following secondary battery.

<Production of secondary battery>

An aluminum packing case was prepared as a battery case. The positive electrode was cut out as a square of 4 cm $\times$ 4 cm and was arranged with a surface at the aluminum foil (current collector) side in contact with the aluminum packing case. Next, the square separator was arranged on the surface of the positive electrode mixed material layer of the positive electrode. The negative electrode was then cut out as a square of 4.2 cm $\times$ 4.2 cm, and this square negative electrode was arranged on the separator with a surface at the negative electrode mixed material layer-side facing toward the separator. Thereafter, a LiPF$_6$ solution of 1.0 M in concentration (containing a mixed solvent of ethylene carbonate (EC)/ethyl methyl carbonate (EMC) = 3/7 as a solvent and also containing 2 volume% of vinylene carbonate and 2 mass% of fluoroethylene carbonate as additives) was loaded as an electrolyte solution. The aluminum packing case was then closed by heat sealing at a temperature of 150°C so as to seal an opening of the aluminum packing and produce a laminate cell-type secondary battery.

Cycle characteristics and resistance to peeling of a mixed material layer were evaluated for the obtained secondary battery. The results are shown in Table 1.

(Examples 2 to 7)

Various operations, measurements, and evaluations were performed in the same way as in Example 1 with the exception that in production of the binder composition for a secondary battery negative electrode, the used amount of the molecular weight modifier was changed to an amount indicated in Table 1. The results are shown in Table 1.

(Examples 8 to 15)

Various operations, measurements, and evaluations were performed in the same way as in Example 1 with the exception that in production of the binder composition for a secondary battery negative electrode, the amounts of acrylic acid, 1,3-butadiene, styrene, and acrylamide in the mixture B were changed such that the obtained particulate polymer had a chemical composition indicated in Table 1. The results are shown in Table 1.

(Example 16)

Various operations, measurements, and evaluations were performed in the same way as in Example 1 with the exception that in production of the binder composition for a secondary battery negative electrode, the amounts of acrylic acid, 1,3-butadiene, styrene, and acrylamide in the mixture B were changed such that the obtained particulate polymer had a chemical composition indicated in Table 1, and the used amount of the molecular weight modifier was changed to an amount indicated in Table 1. The results are shown in Table 1.

(Example 17)

Various operations, measurements, and evaluations were performed in the same way as in Example 1 with the exception that in production of the slurry composition for a secondary battery negative electrode, the thickener A (sodium carboxymethyl cellulose) was changed to a thickener B (lithium salt of acrylic acid/acrylamide/hydroxyethylacrylamide copolymer) obtained by a polymerization method described below. The results are shown in Table 1.

<Polymerization method of thickener B (lithium salt of acrylic acid/acrylamide/hydroxyethylacrylamide copolymer)>

A 1 L flask made of glass was charged with 800 parts of deionized water. Next, 40 parts of acrylamide, 35 parts of acrylic acid, and 25 parts of hydroxyethyl acrylamide were mixed, and this mixture was injected into the flask. The inside of the flask was then purged with nitrogen gas at 1,000 mL/min. The contents of the flask were heated to a temperature of 40°C, and then 25.0 parts of a 1.0% aqueous solution of ascorbic acid as a polymerization accelerator was added by a syringe. At 15 minutes thereafter, 18.0 parts of a 2.0% aqueous solution of potassium persulfate as a polymerization initiator was added into the flask by a syringe to initiate a polymerization reaction.

At 4 hours after addition of the polymerization initiator, 4.4 parts of a 2.0% aqueous solution of potassium persulfate as a polymerization initiator was supplemented into the flask, 11.1 parts of a 1.0% aqueous solution of ascorbic acid as a polymerization accelerator was also supplemented into the flask, the temperature was raised to 60°C, and a polymerization reaction was caused to progress. At 2 hours after supplementing of the polymerization initiator, the flask was opened to air to end the polymerization reaction. An 8% aqueous solution of lithium hydroxide was added to the resultant polymer so as to adjust the pH to 8.0 while performing 6 hours of stirring at a temperature of 25°C to thereby yield a lithium salt of an acrylic acid/acrylamide/hydroxyethylacrylamide copolymer as a thickener B.

(Comparative Examples 1 and 2)

Various operations, measurements, and evaluations were performed in the same way as in Example 1 with the exception that in production of the binder composition for a secondary battery negative electrode, the amounts of acrylic acid, 1,3-butadiene, styrene, and acrylamide in the mixture B were changed such that the obtained particulate polymer had a chemical composition indicated in Table 1. The results are shown in Table 1.

(Comparative Example 3)

Various operations, measurements, and evaluations were performed in the same way as in Example 1 with the exception that in production of the binder composition for a secondary battery negative electrode, all of the styrene in the mixture A was replaced with 1,3-butadiene, and the amounts of acrylic acid, 1,3-butadiene, styrene, and acrylamide in the mixture B were changed such that the obtained particulate polymer had a chemical composition indicated in Table 1. The results are shown in Table 1.

(Comparative Example 4)

Various operations, measurements, and evaluations were performed in the same way as in Example 1 with the exception that in production of the binder composition for a secondary battery negative electrode, all of the 1,3-butadiene in the mixture A was replaced with styrene, and the amounts of acrylic acid, 1,3-butadiene, styrene, and acrylamide in the mixture B were changed such that the obtained particulate polymer had a chemical composition indicated in Table 1. The results are shown in Table 1.

(Comparative Examples 5 and 6)

Various operations, measurements, and evaluations were performed in the same way as in Example 1 with the exception that in production of the binder composition for a secondary battery negative electrode, the used amount of the molecular weight modifier was changed to an amount indicated in Table 1, and the polymerization conditions of the particulate polymer were changed to conditions indicated in Table 1. The results are shown in Table 1.

(Comparative Example 7)

Various operations, measurements, and evaluations were performed in the same way as in Example 1 with the exception that in production of the binder composition for a secondary battery negative electrode, a 5 MPa pressure-resistant vessel equipped with a stirrer was charged with 300 parts of water, 0.5 parts of sodium dodecylbenzenesulfonate as an emulsifier, 0.5 parts of potassium persulfate as a polymerization initiator, 0.3 parts of α-methylstyrene dimer and 1.8 parts of dodecyl mercaptan as molecular weight modifiers, and 30 parts of 1,3-butadiene, 20 parts of methacrylic acid, 10 parts of 2-hydroxyethyl acrylate, 20 parts of glycerin monomethacrylate, 10 parts of acrylamide, and 10 parts of cyclohexyl acrylate in order, and a polymerization reaction was performed at 50°C for 10 hours to obtain a mixture containing a polymer. The results are shown in Table 1.

[Table 1]

| | | | Examples | | | | | | | | | | | | | | | | | | Comparative examples | | | | | | |
|---|---|---|---|---|---|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 1 | 2 | 3 | 4 | 5 | 6 | 7 |
| Ethylenically unsaturated carboxylic acid monomer | AA | Parts | 18 | 18 | 18 | 18 | 18 | 18 | 18 | 2 | 10 | 12 | 15 | 20 | 22 | 24 | 20 | 30 | 18 | - | 33 | 18 | 18 | 18 | 18 | - |
| | MAA | Parts | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 0.116 | 20 |
| | AA + MAA | Parts | 18.116 | 18.116 | 18.116 | 18.116 | 18.116 | 18.116 | 18.116 | 2.116 | 10.116 | 12.116 | 15.116 | 20.116 | 22.116 | 24.116 | 20.116 | 30.116 | 18.116 | 0.116 | 33.116 | 18.116 | 18.116 | 18.116 | 18.116 | 20 |
| Aliphatic conjugated diene monomer | BD | Parts | 52 | 52 | 52 | 52 | 52 | 52 | 52 | 67 | 60 | 58.5 | 53 | 50 | 48 | 42 | 47 | 39 | 52 | 61 | 31 | 74.884 | - | 52 | 52 | 30 |
| Aromatic vinyl monomer | ST | Parts | 22.884 | 22.884 | 22.884 | 22.884 | 22.884 | 22.884 | 22.884 | 29.884 | 26.884 | 24.884 | 26.884 | 21.884 | 17.884 | 15.884 | 32.884 | 12.884 | 22.884 | 31.884 | 15.884 | - | 74.884 | 22.884 | 22.884 | - |
| Ethylenically unsaturated amide monomer | AAm | Parts | 7 | 7 | 7 | 7 | 7 | 7 | 7 | 1 | 3 | 4.5 | 5 | 8 | 12 | 18 | - | 18 | 7 | 7 | 20 | 7 | 7 | 7 | 7 | 10 |
| Unsaturated carboxylic acid ester monomer | HEA | Parts | - | - | - | - | - | - | - | - | - | - | - | - | - | - | - | - | - | - | - | - | - | - | - | 20 |
| | GLM | Parts | - | - | - | - | - | - | - | - | - | - | - | - | - | - | - | - | - | - | - | - | - | - | - | 10 |
| | CHNA | Parts | - | - | - | - | - | - | - | - | - | - | - | - | - | - | - | - | - | - | - | - | - | - | - | 10 |
| Molecular weight modifier | | Parts | 0.5 | 1.5 | 0.8 | 0.65 | 0.4 | 0.3 | 0.1 | 0.5 | 0.5 | 0.5 | 0.5 | 0.5 | 0.5 | 0.5 | 0.5 | 0.35 | 0.5 | 0.5 | 0.5 | 0.5 | 0.5 | 2.3 | 0.02 | 2.1 |
| Maximum temperature during polymerization | | °C | 90 | 90 | 90 | 90 | 90 | 90 | 90 | 90 | 90 | 90 | 90 | 90 | 90 | 90 | 90 | 90 | 90 | 90 | 90 | 90 | 90 | 80 | 90 | 50 |
| Duration of maximum temperature | | h | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 8 | 10 |
| Type of thickener | | - | A | A | A | A | A | A | A | A | A | A | A | A | A | A | A | A | B | A | A | A | A | A | A | A |
| | | | | | | | | | | | | | | | | | | | | | | | | | | |
| Viscosity of binder composition | $\eta_3$ | mPa·s | 18 | 18 | 18 | 18 | 20 | 20 | 20 | 22 | 20 | 20 | 20 | 20 | 20 | 22 | 22 | 18 | 18 | 18 | 20 | 18 | 18 | 18 | 18 | 100 |
| | $\eta_8$ | mPa·s | 250 | 220 | 225 | 230 | 250 | 250 | 250 | 34 | 98 | 132 | 145 | 390 | 513 | 2468 | 140 | 3452 | 250 | 20 | 5000 | 250 | 250 | 250 | 250 | 25000 |
| Viscosity ratio $\alpha$ | | - | 13.9 | 12.2 | 12.5 | 12.8 | 12.5 | 12.5 | 12.5 | 1.5 | 4.9 | 6.6 | 7.3 | 19.5 | 25.7 | 112.2 | 6.4 | 191.8 | 13.9 | 1.1 | 250.0 | 13.9 | 13.9 | 13.9 | 13.9 | 250.0 |
| Viscosity of binder composition | $\eta_4$ | mPa·s | 25 | 25 | 25 | 25 | 25 | 25 | 25 | 25 | 25 | 25 | 25 | 25 | 25 | 25 | 25 | 25 | 25 | 25 | 25 | 25 | 25 | 25 | 25 | 47 |
| | $\eta_9$ | mPa·s | 27 | 27 | 27 | 27 | 27 | 27 | 27 | 27 | 27 | 27 | 27 | 27 | 27 | 40 | 27 | 45 | 27 | 27 | 100 | 27 | 27 | 27 | 27 | 8600 |
| Viscosity ratio $\beta$ | | - | 1.1 | 1.1 | 1.1 | 1.1 | 1.1 | 1.1 | 1.1 | 1.1 | 1.1 | 1.1 | 1.1 | 1.1 | 1.1 | 1.6 | 1.1 | 1.8 | 1.1 | 1.1 | 4.0 | 1.1 | 1.1 | 1.1 | 1.1 | 183.0 |
| Degree of swelling | | Mass% | 600 | 1470 | 1130 | 800 | 500 | 480 | 350 | 600 | 600 | 600 | 600 | 600 | 600 | 600 | 600 | 600 | 600 | 600 | 600 | 600 | 600 | 2000 | 250 | 3000 |
| Amount of insoluble content | | Mass% | 90 | 85 | 87.5 | 88 | 92 | 93 | 97 | 90 | 90 | 90 | 90 | 90 | 90 | 90 | 90 | 90 | 90 | 90 | 90 | 90 | 90 | 75 | 99.5 | 65 |
| | | | | | | | | | | | | | | | | | | | | | | | | | | |
| Evaluations | Foaming | - | A | C | B | A | A | A | A | A | A | A | A | A | A | A | A | C | A | B | E | B | B | D | B | E |
| | Close adherence | - | A | A | A | A | A | B | C | A | A | A | A | A | B | B | A | B | A | C | B | D | D | C | E | C |
| | Flexibility | - | A | A | A | A | A | A | A | B | B | B | A | A | B | B | B | B | A | B | D | B | E | B | C | B |
| | Cycle characteristics | - | A | A | A | A | A | A | A | B | B | A | A | A | A | A | A | A | A | C | C | E | C | C | C | D |
| | Resistance to peeling | - | A | C | B | A | A | A | A | C | B | A | A | A | A | A | B | A | A | E | C | C | C | E | C | E |

19

Abbreviations of monomers in Table 1 indicate the following compounds.

(1) AA: Acrylic acid
(2) MAA: Methacrylic acid
(3) BD: 1,3-Butadiene
(4) ST: Styrene
(5) AAm: Acrylamide
(6) HEA: 2-Hydroxyethyl acrylate
(7) GLM: Glycerin monomethacrylate
(8) CHNA: Cyclohexyl acrylate

It can be seen from Table 1 that in Examples 1 to 17, it was possible to provide a binder composition for a non-aqueous secondary battery negative electrode that is capable of producing a slurry composition having suppressed foaming and forming a negative electrode mixed material layer having excellent resistance to peeling.

It can also be seen from Table 1 that a negative electrode mixed material layer having excellent resistance to peeling could not be formed in Comparative Example 1 in which the viscosity ratio $\alpha$ was less than the lower limit according to the present disclosure, and a slurry composition having suppressed foaming could not be produced in Comparative Examples 2 and 7 in which the viscosity ratio $\alpha$ exceeded the upper limit according to the present disclosure.

It can also be seen from Table 1 that a negative electrode mixed material layer having excellent resistance to peeling could not be formed in Comparative Examples 5 and 7 in which the degree of swelling exceeded the upper limit according to the present disclosure and the amount of insoluble content was less than the lower limit according to the present disclosure.

It can also be seen from Table 1 that close adherence between a negative electrode mixed material layer and a current collector was poor in Comparative Example 6 in which the degree of swelling was less than the lower limit according to the present disclosure and the amount of insoluble content exceeded the upper limit according to the present disclosure.

It can also be seen from Table 1 that cycle characteristics of a negative electrode were poor in Comparative Examples 3 and 7 in which the polymer did not include an aromatic vinyl-containing substance, and that close adherence between a negative electrode mixed material layer and a current collector was also poor in Comparative Example 3.

It can also be seen from Table 1 that flexibility of a negative electrode was poor in Comparative Example 4 in which the polymer did not include an aliphatic conjugated diene.

INDUSTRIAL APPLICABILITY

According to the present disclosure, it is possible to provide a binder composition for a non-aqueous secondary battery negative electrode that is capable of producing a slurry composition having suppressed foaming and forming a negative electrode mixed material layer having excellent resistance to peeling.

Moreover, according to the present disclosure, it is possible to provide a slurry composition for a non-aqueous secondary battery negative electrode that contains this binder composition for a non-aqueous secondary battery negative electrode.

Furthermore, according to the present disclosure, it is possible to provide a negative electrode for a non-aqueous secondary battery that includes a negative electrode mixed material layer formed through this slurry composition for a non-aqueous secondary battery negative electrode.

Also, according to the present disclosure, it is possible to provide a non-aqueous secondary battery that includes this negative electrode for a non-aqueous secondary battery.

**Claims**

1. A binder composition for a non-aqueous secondary battery negative electrode comprising a particulate binder and water, wherein

the particulate binder includes a polymer including an ethylenically unsaturated carboxylic acid monomer unit, an aromatic vinyl monomer unit, and an aliphatic conjugated diene monomer unit,
when a film of the particulate binder is formed, the film has:

a degree of swelling of insoluble content in tetrahydrofuran of not less than 300 mass% and not more than 1500 mass%; and

an amount of insoluble content in tetrahydrofuran of not less than 85 mass% and not more than 99 mass%, and

a ratio of viscosity at pH 8.0 relative to viscosity at pH 3.0 of the binder composition when set to a solid content concentration of 30 mass% is not less than 1.5 and not more than 200.

2. The binder composition for a non-aqueous secondary battery negative electrode according to claim 1, wherein a proportion constituted by the ethylenically unsaturated carboxylic acid monomer unit in the polymer is not less than 2 mass% and not more than 35 mass%.

3. The binder composition for a non-aqueous secondary battery negative electrode according to claim 1 or 2, wherein the polymer further includes an ethylenically unsaturated amide monomer unit.

4. The binder composition for a non-aqueous secondary battery negative electrode according to claim 3, wherein a proportion constituted by the ethylenically unsaturated amide monomer unit in the polymer is not less than 1 mass% and not more than 18 mass%.

5. A slurry composition for a non-aqueous secondary battery negative electrode comprising: a negative electrode active material; and the binder composition for a non-aqueous secondary battery negative electrode according to any one of claims 1 to 4.

6. A negative electrode for a non-aqueous secondary battery comprising: a current collector; and a negative electrode mixed material layer located on the current collector, wherein
the negative electrode mixed material layer is a layer formed through the slurry composition for a non-aqueous secondary battery negative electrode according to claim 5.

7. A non-aqueous secondary battery comprising a positive electrode, a negative electrode, a separator, and an electrolyte solution, wherein
the negative electrode is the negative electrode for a non-aqueous secondary battery according to claim 6.

## INTERNATIONAL SEARCH REPORT

International application No.

**PCT/JP2022/026509**

### A. CLASSIFICATION OF SUBJECT MATTER

*H01M 4/62*(2006.01)i; *H01M 4/13*(2010.01)i; *H01M 10/0566*(2010.01)i
FI:   H01M4/62 Z; H01M4/13; H01M10/0566

According to International Patent Classification (IPC) or to both national classification and IPC

### B. FIELDS SEARCHED

Minimum documentation searched (classification system followed by classification symbols)

H01M4/00-4/62; H01M10/05-10/0587; H01M10/36-10/39

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2019/208419 A1 (ZEON CORPORATION) 31 October 2019 (2019-10-31) paragraphs [0007], [0086], [0088], example 5 | 1-7 |
| X | WO 2015/115089 A1 (ZEON CORPORATION) 06 August 2015 (2015-08-06) paragraphs [0009], [0066], [0089], example 1 | 1-7 |
| A | WO 2020/137594 A1 (ZEON CORPORATION) 02 July 2020 (2020-07-02) example 3 | 1-7 |
| A | WO 2017/056466 A1 (ZEON CORPORATION) 06 April 2017 (2017-04-06) example 1 | 1-7 |
| A | WO 2016/199353 A1 (ZEON CORPORATION) 15 December 2016 (2016-12-15) example 1 | 1-7 |
| A | US 2014/0239239 A1 (SAMSUNG SDI CO., LTD.) 28 August 2014 (2014-08-28) example 101, paragraph [0250] | 1-7 |
| P, X | WO 2022/071523 A1 (ZEON CORPORATION) 07 April 2022 (2022-04-07) paragraph [0077], example 1 | 1-7 |

☐ Further documents are listed in the continuation of Box C.    ☑ See patent family annex.

\*    Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **08 September 2022** | **20 September 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2022/026509**

| Patent document cited in search report | | | Publication date (day/month/year) | Patent family member(s) | | | Publication date (day/month/year) |
|---|---|---|---|---|---|---|---|
| WO | 2019/208419 | A1 | 31 October 2019 | US | 2021/0305573 | A1 | |
| | | | | paragraphs [0010], [0194]-[0209], [0211], example 5 | | | |
| | | | | EP | 3787078 | A1 | |
| | | | | CN | 112005412 | A | |
| | | | | KR | 10-2021-0004983 | A | |
| WO | 2015/115089 | A1 | 06 August 2015 | CN | 105849943 | A | |
| | | | | paragraphs [0016], [0114], [0197]-[0219], example 1 | | | |
| | | | | KR | 10-2016-0113585 | A | |
| WO | 2020/137594 | A1 | 02 July 2020 | US | 2022/0059843 | A1 | |
| | | | | example 3 | | | |
| | | | | CN | 113166330 | A | |
| | | | | KR | 10-2021-0110296 | A | |
| WO | 2017/056466 | A1 | 06 April 2017 | CN | 108028379 | A | |
| | | | | example 1 | | | |
| | | | | KR | 10-2018-0059433 | A | |
| WO | 2016/199353 | A1 | 15 December 2016 | US | 2018/0151866 | A1 | |
| | | | | example 1 | | | |
| | | | | EP | 3306709 | A1 | |
| | | | | CN | 107534131 | A | |
| | | | | KR | 10-2018-0015125 | A | |
| US | 2014/0239239 | A1 | 28 August 2014 | KR | 10-2014-0112278 | A | |
| | | | | production example 1, paragraphs [0160]-[0162] | | | |
| | | | | KR | 10-2014-0112280 | A | |
| | | | | KR | 10-2014-0112281 | A | |
| | | | | KR | 10-2014-0112282 | A | |
| WO | 2022/071523 | A1 | 07 April 2022 | (Family: none) | | | |

Form PCT/ISA/210 (patent family annex) (January 2015)

**EP 4 379 867 A1**

## REFERENCES CITED IN THE DESCRIPTION

**Patent documents cited in the description**

- JP 2020009651 A
- JP 2012204303 A